Europäisches Patentamt

European Patent Office

Office européen des brevets

(19)

(11) **EP 1 221 233 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **00982994.6**

(22) Anmeldetag: **11.10.2000**

(51) Int Cl.[7]: **H04L 27/00**

(86) Internationale Anmeldenummer:
**PCT/DE2000/003601**

(87) Internationale Veröffentlichungsnummer:
**WO 2001/028176 (19.04.2001 Gazette 2001/16)**

(54) **FREQUENCZKORREKTUR UNTER VERWENDUNG DES CORDIC-ALGORITHMUS**

METHOD AND CIRCUIT FOR DIGITALLY CORRECTING THE FREQUENCY OF A SIGNAL USING THE CORDIC ALGORITHM

PROCEDE ET CIRCUIT DE CORRECTION NUMERIQUE DE LA FREQUENCE D'UN SIGNAL EMPLOYANT L'ALGORITHME CORDIC

(84) Benannte Vertragsstaaten:
**DE FR GB IT**

(30) Priorität: **11.10.1999 DE 19948899**

(43) Veröffentlichungstag der Anmeldung:
**10.07.2002 Patentblatt 2002/28**

(73) Patentinhaber: **Infineon Technologies AG**
**81669 München (DE)**

(72) Erfinder:
• **YANG, Bin**
**81735 München (DE)**
• **BUCH, Steffen**
**80541 München (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**EP-A- 0 481 543     EP-A- 0 486 095**
**US-A- 5 550 869     US-A- 5 748 682**

• **NAHM S ET AL: "A CORDIC-BASED DIGITAL QUADRATURE MIXER: COMPARISON WITH A ROM-BASED ARCHITECTURE" ISCAS '98. PROCEEDINGS OF THE 1998 IEEE INTERNATIONAL SYMPOSIUM ON CIRCUITS AND SYSTEMS, Bd. 4, 31. Mai 1998 (1998-05-31), Seiten 385-388, XP000873520 New York, USA ISBN: 0-7803-4456-1**

EP 1 221 233 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Schaltungsanordnung zur digitalen Frequenzkorrektur eines Signals, insbesondere zum Einsatz in einer Sender-/Empfängerschaltung, gemäß dem Oberbegriff von Patentanspruch 1 bzw. 7.

In Sender-/Empfängerschaltungen (Transceiver) werden lokale Oszillatoren zur Erzeugung einer Referenzfrequenz eingesetzt. Insbesondere aufgrund von Produktionstoleranzen, Temperatur- und Versorgungsspannungsschwankungen kann es zu unerwünschten Schwankungen der Referenzfrequenz kommen. Dies bewirkt, daß die zu verarbeitenden Signale ebenfalls große Frequenzschwankungen aufweisen und dadurch die Leistung der Sender/ Empfängerschaltung verringert wird.

Um dem entgegen zu wirken, werden beispielsweise teure und qualitativ hochwertige Oszillatoren, die eine sehr stabile, d.h. schwankungsfreie und genaue Referenzfrequenz erzeugen, in den Sender/Empfängerschaltungen eingesetzt. Ebenso können auch spannungsschwankungs- und temperaturkompensierte Oszillatoren zur Verringerung der Spannungsschwankungs- und Temperaturabhängigkeit der Referenzfrequenz verwendet werden. Ferner werden häufig sogenannte automatische Frequenzkorrekturregelkreise (AFC-Loop: automatic frequency correction loop) zur genauen Einstellung der lokalen Referenzfrequenz benutzt.

Nachteilig ist dabei jedoch, daß diese Lösungen einerseits teuer und andererseits schaltungstechnisch sehr aufwendig sind.

Um die Kosten einer Sender-/Empfängerschaltung insbesondere für den Einsatz in Massenprodukten wie Mobiltelefonen niedrig zu halten, bietet sich die Benutzung von billigen Oszillatoren an, die weder eine Spannungsversorgungs- noch Temperaturkontrolleinrichtung aufweisen. Jedoch kann insbesondere in solchen Produkten keine zu große Schwankung der Referenzfrequenz toleriert werden. Daher ist unbedingt eine nachträgliche Korrektur der Frequenz von zu verarbeitenden Signalen notwendig.

Mathematisch kann ein Frequenzkorrekturvorgang eines Basisbandsignals x in einer Sender/Empfängerschaltung beispielsweise eines Mobilfunkempfängers wie folgt dargestellt werden:

Die Abtastwerte $x(k)$ des Basisbandsignals $x(k) = i(k) + j \cdot q(k)$ (mit $j = \sqrt{-1}$), dessen Symbole eine Symboldauer T aufweisen, werden mit den Abtastwerten eines (komplexen) Frequenzkorrektursignals $z(k) = 2\pi\Delta f \cdot T/m \cdot k$ multipliziert, wobei m der sogenannte Überabtastfaktor ist; diese Multiplikation im Zeitbereich entspricht im Frequenzbereich einer Frequenzverschiebung des Basisbandsignals $x(k)$ um die Frequenz $\Delta f$ . In der komplexen Signal-Zeigerebene stellt dies eine Drehung des "Zeigers" $x(k)$ um den Winkel $z(k)$ dar:

$$x(k)\cdot\exp(j\,z(k)) = [i(k) + j\cdot q(k)][\cos(z(k)) + j\cdot\sin(z(k))]$$

$$= [i(k)\cos(z(k)) - q(k)\sin(z(k))] +$$

$$j\cdot[i(k)\cdot\sin(z(k)) + q(k)\cdot\cos(z(k))],$$

Je genauer und feiner einstellbar nun das Frequenzkorrektursignal $z(k)$ ist, desto besser fällt die Frequenzkorrektur aus, d.h. in feineren Schritten kann der "Zeiger" $x(k)$ in der komplexen Ebene gedreht werden.

Es wäre beispielsweise möglich, durch digitale Multiplizierer und Koeffiziententabellen für die Sinus- und Kosinus-Funktion die Frequenzkorrektur gemäß der obigen Gleichung zu berechnen, allerdings bedingt dies einen sehr großen schaltungstechnischen Aufwand, der eine solche Lösung teuer und aufwendig macht. Insbesondere bei einer Ausführung als integrierte Schaltung benötigt diese Lösung eine große Chipfläche und ist daher sehr teuer.

In dem Artikel "A CORDIC-BASED DIGITAL QUADRATURE MIXER: COMPARISON WITH A ROM-BASED ARCHITECTURE", von S. Nahm et al., proceedings of the 1998 IEEE international symposium on circuits and systems, Band 4, 31, May 1998, Seiten 385-388, ist ein Quadraturmischer beschrieben, der auf dem CORDIC-Algorithmus basiert.

Aufgabe der Erfindung ist es daher, ein Verfahren und eine Schaltungsanordnung zur digitalen Frequenzkorrektur, insbesondere zum Einsatz in einer Sender-/Empfängerschaltung, anzugeben, die mit geringem schaltungstechnischen Aufwand eine sehr genaue Frequenzkorrektur erzeugt.

Diese Aufgabe wird durch ein Verfahren mit den Merkmalen von Patentanspruch 1 und eine Vorrichtung mit den Merkmalen von Patentanspruch 7 gelöst. Weiterbildungen der Erfindung sind den abhängigen Patentansprüchen entnehmbar.

Ein wesentlicher Gedanke der Erfindung ist es, zur digitalen Frequenzkorrektur eines Signals den CORDIC (Coordinate Rotation Digital Computer)-Algorithmus zu verwenden. Mittels des CORDIC-Algorithmus kann nämlich verhältnismäßig einfach eine Frequenz- und Phasenkorrektur durchgeführt werden. Der CORDIC-Algorithmus läßt sich mit einem geringen schaltungstechnischen Aufwand ausführen, so daß die Kosten einer darauf basierenden Schaltung - billiger Oszillator und CORDIC-Korrektur - geringer als bei einem aufwendigen kompensierten Oszillator sind.

Der CORDIC-Algorithmus ist in J.E. Volder, "The CORDIC trigonometric computing technique", IRE Trans. Electronic Computers, Vol.8, pp. 340-334, 1959, beschrieben; der Algorithmus ist N-fach iterativ und dient zur Drehung eines Vektors um einen definierten Winkel $\alpha_n = \arctan(2^{-n})$, n = 0, 1, ..., N-1. Stellt der Vektor, wie eingangs beschrieben, den Zeiger eines komplexen Signals dar, ist durch diese Drehung die Veränderung der Frequenz des Signals entsprechend einer Multiplikation mit einem Frequenzkorrektursignal möglich. Mit jeder Iteration wird der Drehwinkel kleiner ($\alpha_0 = 45° > \alpha_1 = 26,6° > ... > \alpha_{N-1}$), so daß sich die Frequenz des Signals mit zunehmenden Iterationsschritt in immer kleineren Schritten ändert.

Die iterative Drehung um einen Winkel a kann durch die folgende lineare Kombination dargestellt werden:

$$a \approx \sigma_0\alpha_0 + \sigma_1\alpha_1 + ... + \sigma_{N-1}\alpha_{N-1} \qquad (\sigma_n = \pm 1)$$

Die Genauigkeit der Drehung ist durch den kleinsten Drehwinkel $\alpha_{N-1}$ vorgegeben. Durch das Vorzeichen $\sigma_n$ wird die Drehrichtung (+1 Gegen-Uhrzeigersinn, -1 Uhrzeigersinn) angegepen.

Ein Signal, das durch Abtastwerte der Inphase-Kompontente $I_n$ und der Quadratur-Komponente $Q_n$ dargestellt ist, wird nun iterativ durch den CORDIC-Algorithmus um den Winkel a gedreht. Dazu können die einzelnen Drehungen gemäß dem CORDIC-Algorithmus durch einfache Schiebe- und Additionsoperationen ausgeführt werden:

$$I_{n+1} = I_n - \sigma_n \, 2^{-n} \, Q_n$$

$$Q_{n+1} = \sigma_n \, 2^{-n} \, I_n + Q_n$$

Mit der Formel $\alpha_n = \arctan(2^{-n})$ für den Drehwinkel kann die obige Gleichung auch folgendermaßen dargestellt werden:

$$I_{n+1} = \mathrm{sqrt}(1 + 2^{-2n}) \cdot [\cos(\sigma_n \, \alpha_n) \cdot I_n - \sin(\sigma_n \, \alpha_n) \cdot Q_n]$$

$$Q_{n+1} = \mathrm{sqrt}(1 + 2^{-2n}) \cdot [\sin(\sigma_n \, \alpha_n) \cdot I_n + \cos(\sigma_n \, \alpha_n) \cdot Q_n]$$

Nach N Drehungen erhält man:

$$I_N = K \cdot [\cos(z) \cdot I_0 - \sin(z) \cdot Q_0]$$

$$Q_N = K \cdot [\sin(z) \cdot I_0 + \cos(z) \cdot Q_0]$$

Mit K ≈ 1,647. Dadurch kann das zu korrigierende Signal in der Frequenz eingestellt werden.

Bei dem erfindungsgemäßen Verfahren wird nun die komplexe Multiplikation der Abtastwerte x(k) eines Signals, insbesondere eines Basisbandsignals, mit einem Frequenzkorrektursignal z(k) durch den CORDIC-Algorithmus ausgeführt. Da im Prinzip keine "starre" Frequenzkorrektur, sondern eine aufgrund des CORDIC-Algorithmus variable Frequenzkorrektur stattfindet, spielt die Konstanz der Referenzfrequenz eines Oszillators keine große Rolle.

Um den CORDIC-Algorithmus für das erfindungsgemäße Verfahren einzusetzen, müssen allerdings einige Nachteile des Algorithmus durch die Erfindung ausgeglichen werden:

- Da der CORDIC-Algorithmus nur einen begrenzten Korrekturbereich von einem Drehwinkel von ungefähr 99° ermöglicht, ist eine Verringerung des zur Korrektur notwendigen Drehwinkels erforderlich. Hierzu ist erfindungsgemäß vorgesehen, den Drehwinkel so zu korrigieren, daß er immer einen Wert von kleiner oder gleich 90° aufweist. Der durch z(k) dargestellte Drehwinkel wird Modulo-$2\pi$ in einem Register der Bitbreite $N_w$ gespeichert. Der in dem Register gespeicherte Wert w(k) wird durch die Formel w(k) = w(k-1) + $\Delta f \cdot T/m$ akkumuliert. Der Wert 111... 111 für w(k) entspricht dem größten Wert $1 - 2^{N_w}$ entsprechend einem Winkel von $2\pi \cdot (1 - 2^{N_w})$; durch einfaches Ignorieren eines Überlaufs des Registers wird somit die Modulo-$2\pi$-Operation erreicht.

- Ferner ist es für ein optimales Ausführen des CORDIC-Algorithmus erforderlich, daß der durch das Frequenzkorrektursignal dargestellte Zeiger z(k) im ersten oder vierten Quadranten der komplexen I/Q-Ebene liegt. Hierzu ist vorgesehen, daß die Inphase- und Quadratur-Komponente des Zeigers des zu korrigierenden Signal jeweils mit $(-1)^s$ multipliziert werden, s = 0,1, wenn der Zeiger im zweiten oder dritten Quadranten der komplexen I/Q-Ebene liegt und dann den Zeiger um den Winkel z(k) - π zu drehen.

Das Vorzeichen-Flag s wird wie die Vorzeichen $\sigma_n$ für die einzelnen Iterationen (Mikrorotationen) des CORDIC-Algorithmus berechnet. Erfindungsgemäß ist hierzu eine Vorzeichentabelle vorgesehen, in der für alle möglichen Rotationswinkel die entsprechenden Vorzeichen der Mikrorotationen derart abgelegt sind, daß das Vorzeichen-Flag s und die beiden Vorzeichen $\sigma_0$ und $\sigma_1$ direkt berechnet werden und die übrigen Vorzeichen $\sigma_n$, n = 2, 3, ..., N-1, aus den Bits $w_2, w_3, ..., w_{N+1}$ des in dem Register gespeicherten Werts w(k) berechnet werden.

Die Bitbreite $N_w$ des Registers und die Anzahl der Mikrorotationen N des CORDIC-Algorithmus beeinflussen den Korrekturbereich bzw. das Phasenrauschen des frequenzkorrigierten Signals x(k)·exp(jz(k)) und sind daher gemäß der Erfindung wie folgt zu wählen.

Die Bitbreite $N_w$ sollte für einen korrigierbaren Frequenzbereich Δf die folgende Ungleichung erfüllen:

$$N_w >= log2(m) - log2(\Delta f \cdot T)$$

Für ein gewünschtes Signal-zu-Phasenrausch-Verhältnis SNR sollte die Anzahl N der Mikrorotationen wie folgt gewählt werden:

$$(SNR + 3)/6 <= N <= N_w - 2$$

Damit wird das gewünschte Signal-zu-Phasenrausch-Verhältnis SNR erreicht, wobei die obere Grenze für N durch die Bitbreite des Registers vorgegeben ist.

Schließlich müssen bei der Implementierung des CORDIC-Algorithmus noch zwei Guard-Bits in jeder Iteration des Algorithmus vorgesehen werden, um den größtmöglichen Wert des Skalierungsfaktors, nämlich sqrt(2) · K ≈ sqrt(2) · 1,647 ≈ 2,33 verarbeiten zu können. K ist der Skalierungsfaktor aufgrund des CORDIC-Algorithmus und sqrt(2) ist der mögliche "Wachstumsfaktor" der Inphase- und Quadratur-Komponente durch den CORDIC-Algorithmus. Demnach sollte die Ein- und Ausgangsbitbreite des CORDIC-Algorithmus so groß wie möglich sein, vorzugsweise mindestens größer als N + 2. Andernfalls wird durch Rundungsfehler des CORDIC-Algorithmus ein größeres Rauschen als durch Phasenfehler erzeugt.

Die folgende Beschreibung von bevorzugten Ausführungsformen der Erfindung anhand von Zeichnungen dient zur weiteren Erklärung der Erfindung. In der Zeichnung zeigt:

Figur 1 ein Blockschaltbild mit den wesentlichen Komponenten zur Durchführung des erfindungsgemäßen Verfahrens,

Figur 2 den Aufbau der Vorzeichen-Tabelle für den CORDIC-Algorithmus,

Figur 3 den Aufbau eines Mikrorotationsblockes für den CORDIC-Algorithmus, und

Figur 4 den Einsatz des erfindungsgemäßen Verfahrens in einem Transceiver eines GSM-Mobiltelefones.

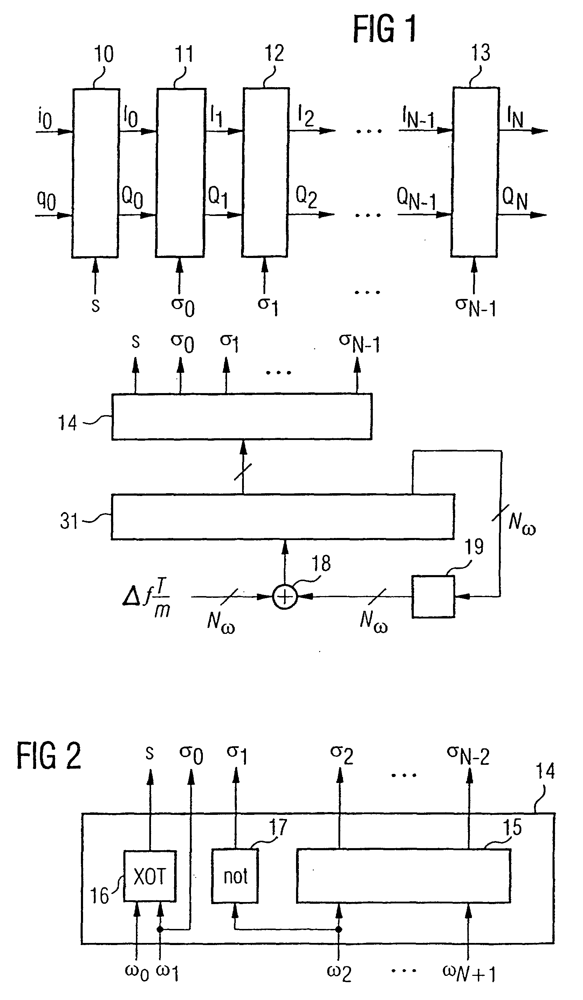

In Figur 1 werden Abtastwerte $i_0$ und $q_0$ der Inphase- bzw. Quadratur-Komponente eines komplexen Basisbandsignals x(k) einem Quadrantenkorrekturblock 10 zugeführt (k bezeichnet hierbei die diskreten Abtastzeitpunkte). Der Quadrantenkorrekturblock 10 bewirkt, daß der durch das Basisbandsignal x(k) dargestellte Zeiger in der komplexen Inphase-/Quadraturebene im ersten oder vierten Quadranten liegt. Liegt der Zeiger nämlich in dem zweiten oder dritten Quadranten, arbeitet der CORDIC-Algorithmus nicht richtig. Wie bereits beschrieben, muß die Inphase- und die Quadratur-Komponente jeweils mit -1 multipliziert werden, wenn der Zeiger im zweiten oder dritten Quadranten der komplexen I/Q-Ebene liegt.

Dem Quadrantenkorrekturblock 10 sind in Reihe N Mikrorotationsblöcke nachgeschaltet, von denen nur drei Blöcke 11, 12 und 13 dargestellt sind. Jeder Mikrorotationsblock berechnet einen Schritt des CORDIC-Algorithmus, d. h. dreht den durch die Inphase- und Quadratur-Komponente dargestellten Zeiger in der komplexen I/Q-Ebene um einen Winkel $\pm \alpha_n = \pm$ arctan $(2^{-n})$. Am Eingang des Mikrorotationsblockes 11 liegen die Komponenten $I_0$ und $Q_0$ an, die am Ausgang als Komponenten $I_1$ und $Q_1$ einen um den Winkel $\pm \alpha_0 = \pm$ arctan (1) gedrehten Zeiger darstellen.

Am Ausgang des Mikrorotationsblockes 12 liegen die Komponenten $I_2$ und $Q_2$ an, die einen um den Winkel $\pm \alpha_1 = \pm$ arctan$((2^{-1}))$ gedrehten Zeiger darstellen. Schließlich liegt am Ausgang des Mikrorotationsblockes 13 nach Durchlaufen von N Stufen des CORDIC-Algorithmus ein durch die Komponenten $I_N$ und $Q_N$ dargestellter Zeiger an, der das frequenzkorrigierte komplexe Basisbandsignal darstellt. Bei jeder Drehung in einem Mikrorotationsblock wird entweder im Gegen-Uhrzeigersinn oder im Uhrzeigersinn gedreht. Die Drehrichtung hängt dabei von den Vorzeichen $\sigma_n$ ab.

Die Vorzeichen $\sigma_n$ und das Eingangssignal s für den Quadrantenkorrekturblock 10 werden von der Vorzeichentabelle 14 erzeugt. Die Vorzeichentabelle 14 wird von einem Register 31 mit einer Bitbreite $N_w$ angesteuert, in dem ein Registerwert w mit $N_w$ Bits abgelegt ist. Dabei werden die ersten (N+2) Bits von w(k) des Registers 31 der Vorzeichentabelle 14 zugeführt.

In Figur 2 ist der Aufbau der Vorzeichentabelle 14 dargestellt. Das Eingangssignal s für den Quadrantenkorrekturblock 10 wird durch eine logische XOR-Verknüpfung 16 der beiden niederwertigsten Bits $w_0$ und $w_1$ des Registerwerts w berechnet. Das erste Vorzeichen $\sigma_0$ entspricht direkt dem Bit $w_1$ des Registerwerts w. Das zweite Vorzeichen $\sigma_1$ wird durch Invertierung 17 des Bits $w_2$ des Registerwerts w berechnet. Die restlichen Vorzeichen $\sigma_2$ bis $\sigma_{N-1}$ sind in einem Festwertspeicher 15 (ROM: Read Only Memory) abgelegt, in dem $2^N$ (N - 2) Bits gespeichert sind. Durch die Berechnung von s, $\sigma_0$ und $\sigma_1$ aus den drei niederwertigsten Bits $w_0$ bis $w_2$ kann das ROM bzw. der Festwertspeicher 15 kleiner ausfallen, ansonsten wäre nämlich eine Speicherkapazität von $2^{N+2}\cdot$ (N + 1) Bits erforderlich.

Die folgende Tabelle verdeutlicht die Berechnung von s, $\sigma_0$ und $\sigma_1$ aus den drei niederwertigsten Bits $w_0$ bis $w_2$ des Registerwerts w und den entsprechenden Drehwinkelbereich:

| $w_0$ | $w_1$ | $w_2$ | Drehwinkelbereich | | Quadrant | S | $\sigma_0$ | $\sigma_1$ |
|---|---|---|---|---|---|---|---|---|
| 0 | 0 | 0 | 0° | 45° | I | 0 | 0 | 1 |
| 0 | 0 | 1 | 45° | 90° | I | 0 | 0 | 0 |
| 0 | 1 | 0 | 90° | 135° | II | 1 | 1 | 1 |
| 0 | 1 | 1 | 135° | 180° | II | 1 | 1 | 0 |
| 1 | 0 | 0 | 180° | 225° | III | 1 | 0 | 1 |
| 1 | 0 | 1 | 225° | 270° | III | 1 | 0 | 0 |
| 1 | 1 | 0 | 270° | 315° | IV | 0 | 1 | 1 |
| 1 | 1 | 1 | 315° | 360° | IV | 0 | 1 | 0 |

Die Vorzeichen $\sigma_n$ sind so kodiert, daß eine logische "0" eine Drehung im Gegen-Uhrzeigersinn und eine logische "1" eine Drehung im Uhrzeigersinn bedeutet.

Die Eingangsbits der Vorzeichentabelle 14, d.h. der Registerwert w wird durch eine Akkumulation w(k) = w(k-1) + $\Delta$f T/m ausgehend von dem Vorgabewert $\Delta$f · T/m berechnet. Hierzu ist ein Addierer 18 und ein Verzögerungsglied 19 vorgesehen. Das Verzögerungsglied 19 verzögert den letzten Registerwert w(k-1) um die Zeit T/m. Der Addierer addiert dann den Vorgabewert $\Delta$f T/m, der die Korrekturfrequenz $\Delta$f vorgibt, zu w(k-1). Das Ergebnis der Addition ergibt dann den neuen Registerwert w für das Register 31.

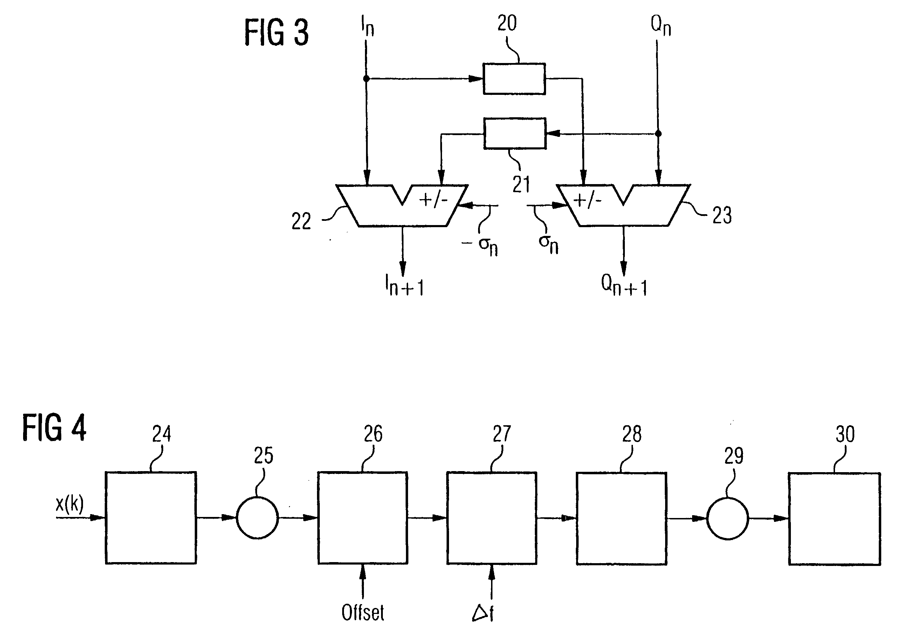

In Figur 3 ist der Aufbau eines Mikrorotationsblockes dargestellt, der die eingangs beschriebene CORDIC-Grundoperation

$$I_{n+1} = I_n - \sigma_n\, 2^{-n}\, Q_n$$

$$Q_{n+1} = \sigma_n\, 2^{-n}\, I_n + Q_n$$

berechnet. Hierzu ist ein erstes und zweites Schieberegister 20 bzw. 21 vorgesehen, das jeweils die Inphasekomponente $I_n$ bzw. Quadraturkomponente $Q_n$ um n Bits verschiebt ($2^{-n}$). Die um n Bits geschobene Inphasekomponente $I_n$ bzw. Quadraturkomponente $Q_n$ wird dann mit dem Vorzeichen $\sigma_n$ bzw. -$\sigma_n$ multipliziert, d.h. das Vorzeichen der geschobenen Komponenten wird entsprechend verändert, und zu der ursprünglichen Quadraturkomponente $Q_n$ bzw. Inphasekomponente $I_n$ in einem ersten 22 bzw. zweiten 23 Akkumulator addiert. Als Ergebnis ergibt sich ein gedrehter Zeiger, dargestellt durch die Inphasekomponente $I_{n+1}$ und Quadraturkomponente $Q_{n+1}$.

Figur 4 zeigt den bevorzugten Einsatz des erfindungsgemäßen Verfahrens in einem Transceiver eines GSM-Mobiltelefones. Abtastwerte x(k) eines Basisbandsignals werden einem digitalen Vorfilter 24 zugeführt, das mit einer hohen Taktrate betrieben wird, die ein Vielfaches der Abtastrate von 2 des Basisbandsignals beträgt.

Dem digitalen Vorfilter 24 ist ein erster Dezimator 25 nachgeschaltet, der die hohe Taktrate des Ausgangssignals der Vorfilters 24 auf eine geringere Taktrate teilt.

Dem ersten Dezimator 25 ist ein Offset-Kompensationsblock 26 zur Kompensation eines gegebenenfalls in dem Basisbandsignal enthaltenen DC-Offset, d.h. Gleichanteils, vorgesehen. Der zu kompensierende Offset wird dem Offset-Kompensationsblock 26 von einem digitalen Signalprozessor 30 vorgegebenen. Der digitale Signalprozessor 30 schätzt anhand erstes Abtastwerte des Basisbandsignals einen gegebenenfalls in dem Signal enthaltenen Offset bzw. Gleichanteil und führt diesen geschätzten Anteil dem Offset-Kompensationsblock 26 zur Kompensation zu. Würde ein Offset des Basisbandsignals nicht beseitigt werden, so wird dieser Offset durch den CORDIC-Algorithmus in ein störendes Sinussignal überführt, das beispielsweise in dem digitalen Signalprozessor 30 nur aufwendig wieder zu beseitigen ist.

Dem Offset-Kompensationsblock 26 ist ein CORDIC-Frequenzkorrekturblock 27 zur Durchführung des erfindungsgemäßen Verfahrens nachgeschaltet. Die Korrekturfrequenz f, um die das Basisbandsignal korrigiert werden soll, wird dazu dem CORDIC-Frequenzkorrekturblock 27 von dem digitalen Signalprozessor 30 zugeführt. Der CORDIC-Frequenzkorrekturblock 27 korrigiert die Frequenz des Basisbandsignals wie vorher beschrieben um en die Korrekturfrequenz $\Delta f$.

Dem CORDIC-Frequenzkorrekturblock 27 ist ein digitales Nachfilter 28 nachgeschaltet, das genau mit der zweifachen Abtastrate 2 des Basisbandsignals getaktet ist. Das digitale Nachfilter 28 ist ein Tiefpaßfilter mit einer sehr großen Flankensteilheit und dient zum Beseitigen störender Frequenzen und von Rauschen des Basisbandsignals.

Mit einem zweiten Dezimator 29 wird dann das frequenzkorrigierte und mehrfach gefilterte Basisbandsignal um den Faktor 2 auf die Abtastrate des Basisbandsignals dezimiert und dem digitalen Signalprozessor 30 zur weiteren Verarbeitung zugeführt.

An dieser Stelle sei darauf hingewiesen, daß sich das erfindungsgemäße Verfahren und die entsprechende Vorrichtung zur Durchführung des Verfahrens auch bevorzugt zum Einsatz in dem Sender und Empfänger eines UMTS (Universal Mobile Telecommunication System)-Mobilfunkgerätes zur Frequenzkorrektur eignet. Eine weitere Anwendung ist der Einsatz des erfindungsgemäßen Verfahrens überall dort in Sendern und Empfängern, wo das erfindungsgemäße Verfahren und die entsprechende Einrichtung neben der Frequenzkorrektur auch zur digitalen Frequenzmischung dient. Da die Aufgaben der Frequenzkorrektur und der Frequenzmischung sehr verwandt sind, läßt sich auf diese Weise der traditionelle Mischer sparen und somit der aufwand nochmals deutlich reduzieren. Beispiele für solche Sender und Empfänger findet man im Schnurlos-Telefon des DECT-Standards (Digital Enhanced Cordless Telephone), DVB (Digital Video Broadcasting) und Kabelmodem.

Bezugszeichenliste

| | |
|---|---|
| 10 | Quadrantenkorrekturblock |
| 11 - 13 | Mikrorotationsblöcke des CORDIC-Algorithmus |
| 14 | Vorzeichentabelle |
| 15 | Festwertspeicher (ROM) |
| 16 | XOR-Verknüpfung |
| 17 | Invertierung |
| 18 | Addierer |
| 19 | Verzögerungsglied |
| 20, 21 | erstes, zweites Schieberegister |
| 22, 23 | erster, zweiter Akkumulator |
| 24 | digitales Vorfilter |
| 25 | erster Dezimator |
| 26 | Offset-Kompensationsblock |
| 27 | CORDIC-Frequenzkorrekturblock |
| 28 | digitales Nachfilter |
| 29 | zweiter Dezimator |
| 30 | digitaler Signalprozessor |
| 31 | Register |

**Patentansprüche**

**1.** Verfahren zur digitalen Frequenzkorrektur eines Signals x(k), das mit einem Abtasttakt k abgetastet und digitalisiert wird, und das mittels eines CORDIC-Algorithmus mit N-Stufen derart verarbeitet wird, dass die Frequenz des Signals x(k) um eine vorgebbare Frequenz geändert wird, wobei

- das Signal x(k) durch einen ersten Vektor mit der ersten Inphasekomponente $i_0$ und der ersten Quadraturkomponente $q_0$ in der komplexen I/Q-Ebene dargestellt wird,
- der erste Vektor mittels des CORDIC-Algorithmus um einen vorgegebenen Winkel z(k) auf einen zweiten Vektor mit einer zweiten Inphasekomponente $I_N$ und zweiten Quadraturkomponente $Q_N$ abgebildet wird und der zweite Vektor das Signal mit einer geänderten Frequenz und Phase darstellt,
- sich der vorgegebene Winkel z(k) aus einer Vielzahl von $N \geq 3$ verschiedenen Drehwinkeln $\alpha_n$ zusammensetzt, wobei jeder der verschiedenen Drehwinkel $\alpha_n$ gemäß der Formel arctan($2^{-n}$), n = 0, 1, ..., N-1 berechnet wird und jeweils mit einem Vorzeichen $\sigma_n$ versehen wird, das die Drehrichtung angibt,

**dadurch gekennzeichnet, dass**
der vorgegebene Winkel z(k) durch eine Quadrantenkorrektur in Abhängigkeit eines Eingangssignals s auf einen Bereich $-\pi/2$ bis $+\pi/2$ begrenzt wird, und die Vorzeichen $\sigma_0$, $\sigma_1$ für den ersten und den zweiten Drehwinkel $\alpha_0$, $\alpha_1$ und das Eingangssignal s für die Quadrantenkorrektur von einer Logikschaltung (16,17) berechnet werden, und die Vorzeichen für die restlichen Drehwinkel aus einem Festwertspeicher (15) ausgelesen werden.

2. Verfahren nach Anspruch 1, **dadurch gekennzeichnet, dass** der vorgegebene Winkel z(k) Modulo-$2\pi$ als Registerwert w(k) mit einer Bitbreite $N_w$ gespeichert wird, wobei der Registerwert w(k) in jedem Takt k des Abtasttaktes durch Addition eines dem vorgegebenen Winkel z(k) zugeordneten vorgegebenen Wertes und des Registerwertes w(k-1) des vorhergehenden Taktes k-1 des Abtasttaktes berechnet wird und ein Überlauf des Registerwerts w(k) vernachlässigt wird.

3. Verfahren nach Anspruch 2, **dadurch gekennzeichnet, dass** die Begrenzung des vorgegebenen Winkels z(k) auf einen Bereich von $-\pi/2$ bis $+\pi/2$ durch die Quadrantenkorrektur erreicht wird, indem die erste Inphasekomponente $i_0$ und die erste Quadrantenkomponente $q_0$ jeweils mit $(-1)^s$, s = 0, 1, multipliziert wird.

4. Verfahren nach einem der Ansprüche 2 oder 3, **dadurch gekennzeichnet, dass** die Bitbreite $N_w$ des Registerwerts w(k) die folgende Bedingung erfüllt:

$$N_w \geq \log2(m) - \log2(\Delta f \cdot T),$$

wobei m der Überabtastfaktor des Signals x(k) $\Delta f$ die vorgebbare Frequenz und T die Symboldauer eines digitalen Wertes des Signals x(k) darstellt.

5. Verfahren nach einem der Ansprüche 2 - 4, **dadurch gekennzeichnet, dass** die Anzahl N der Stufen des CORDIC-Algorithmus für ein vorgegebenes Signal-Phasenrauschen-Verhältnis SNR und eine Bitbreite $N_w$ des Registerwertes w(k) die folgende Bedingung erfüllt:

$$(SNR + 3)/6 \leq N \leq N_w - 2.$$

6. Verfahren nach einem der vorhergehenden Ansprüche, **dadurch gekennzeichnet, dass** in jeder Stufe des CORDIC-Algorithmus zwei Guard-Bits vorgesehen sind, so dass die Ein- und Ausgangsbitbreite des CORDIC-Algorithmus größer als N + 2 ist.

7. Vorrichtung zur digitalen Frequenzkorrektur eines Signals, das mit einem Abtasttakt k abgetastet und digitalisiert x(k) ist,

- wobei eine Reihenschaltung von $N \geq 3$ Mikrorotationsblöcken (11 - 13) vorgesehen ist, der eine Inphasenkomponente $i_0$ und eine Quadraturkomponente $q_0$ des Signals zugeführt wird,
- jedem Mikrorotationsblock (11 - 13) jeweils ein Vorzeichen $\sigma_n$ aus einer von der Vorrichtung umfassten Vorzeichentabelle (14) zur Erzeugung der Vorzeichen $\sigma_0$, $\sigma_1$, ... $\sigma_{N-1}$ zugeführt wird, wobei in jedem Mikrorotationsblock (11 - 13) Guard-Bits vorgesehen sind,
- ein Register (31) vorgesehen ist, in dem ein Modulo-$2\pi$-Wert eines vorgegebenen Winkels z(k) gespeichert ist, und dessen Registerwert w(k) der Vorzeichentabelle (14) als Adresse zugeführt wird,

- ein Addierer (18) und ein Verzögerungsglied (19) vorgesehen sind wobei der Addierer (18) einen vorgegebenen digitalen Frequenzwert mit dem Ausgangswert des Verzögerungsglieds (19) addiert und das Ergebnis in dem Register (31) speichert und dem Verzögerungsglied (19) der Registerwert w(k-1) des vorhergehenden Taktes k-1 zugeführt wird,

  **dadurch gekennzeichnet,**

- **dass** der Reihenschaltung der Mikrorotationsblöcke (11 - 13) ein Quadrantenkorrekturblock (10) vorgeschaltet ist, dem ein Eingangssignal s zugeführt wird, und so ausgestaltet ist, dass der das Signal darstellende Vektor $i_0$, $q_0$ in den ersten oder vierten Quadranten der komplexen I/Q-Ebene durch den Quadrantenkorrekturblock (10) gedreht wird, und
- **dass** die Vorzeichentabelle (14) eine Logikschaltung (16, 17) zur Berechnung der ersten beiden Vorzeichen $\sigma_0$, $\sigma_1$ und des Eingangssignals s für den Quadrantenkorrekturblock (10) sowie einen Festwertspeicher (15), der die restlichen Vorzeichen $\sigma_2$, $\sigma_3$, ..., $\sigma_{N-1}$ speichert, umfasst.

8. Vorrichtung nach Anspruch 7, **dadurch gekennzeichnet, dass** jeder Mikrorotationsblock (11 - 13) zwei Schieberegister (20, 21) zum Schieben der Komponenten eines Eingangsvektors $I_n$, $Q_n$ des Mikrorotationsblocks (11 - 13) um n Bits und zwei Akkumulatoren (22, 23) zum Addieren der Komponenten des Eingangsvektors $I_n$, $Q_n$ mit den Ausgangswerten der Schieberegister (20, 21) aufweist, wobei die Ausgangswerte der Schieberegister (20, 21) mit dem jeweiligen Mikrorotationsblock (11 - 13) zugeordneten Vorzeichen $\sigma_n$ versehen sind.

9. Vorrichtung nach einem der Ansprüche 7 oder 8, **dadurch gekennzeichnet, dass** der Festwertspeicher (15) eine Kapazität für $2^N \cdot (N - 2)$ Bits aufweist und die Logikschaltung ein XOR-Gatter (16) und einen Inverter (17) zur Erzeugung der Vorzeichen $\sigma_0$, $\sigma_1$ für den ersten und zweiten Mikrorotationsblock (11, 12) und des Eingangssignals s für den Quadrantenkorrekturblock (10) aufweist.

10. Vorrichtung nach Anspruch 9, **dadurch gekennzeichnet, dass** das Eingangssignal s für den Quadrantenkorrekturblock (10) von dem XOR-Gatter (16) ausgegeben wird, wobei das XOR-Gatter (16) Eingänge für die beiden niederwertigsten Bits $w_0$, $w_1$ des Registerwerts w(k) aufweist.

11. Vorrichtung nach einem der Ansprüche 9 und 10, **dadurch gekennzeichnet, dass** das Vorzeichen $\sigma_0$ für den ersten Mikrorotationsblock (11) dem zweiten Bit $w_1$ des Registerwerts w(k) entspricht.

12. Vorrichtung nach einem der Ansprüche 9 bis 11, **dadurch gekennzeichnet, dass** das Vorzeichen $\sigma_1$ für den zweiten Mikrorotationsblock (12) dem invertierten dritten Bit $w_2$ des Registerwerts w(k) entspricht..

13. Empfänger eines Mobilfunkgerätes, der ein Basisbandfilter mit mehreren Stufen (24 - 30) zur Filterung und Verarbeitung eines empfangenen Basisbandsignals x(k) aufweist und wobei die Vorrichtung nach einem der Ansprüche 7 bis 12 vor der letzten Stufe (28) des Basisbandfilters zur Frequenzkorrektur des Basisbandsignals x(k) vorgesehen ist.

14. Empfänger nach Anspruch 13, **dadurch gekennzeichnet, dass** vor der Vorrichtung nach einem der Ansprüche 7 bis 12 ein Offset-Kompensationsblock (26) zur Entfernung von Gleichanteilen des Basisbandsignals x(k) vorgesehen ist.

15. Empfänger nach einem der Ansprüche 13 oder 14, **dadurch gekennzeichnet, dass** der Empfänger ein GSM- oder UMTS-Mobilfunkempfänger ist.

**Claims**

1. Method for digital frequency correction of a signal x(k), which is sampled and digitized by means of a sampling clock k, and which is processed by means of a CORDIC algorithm with N stages, such that the frequency of the signal x(k) is changed by a frequency which can be predetermined, with

- the signal x(k) being represented by a first vector with the first in-phase component $i_0$ and the first quadrature component $q_0$ on the complex I/Q plane,
- the first vector being mapped by means of the CORDIC algorithm through a predetermined angle z(k) onto a second vector with a second in-phase component $I_N$ and a second quadrature component $Q_N$, and the second vector representing the signal with a changed frequency and phase,

- the predetermined angle z(k) being composed of a large number of $N \geq 3$ different rotation angles $\alpha_n$ with each of the different rotation angles $\alpha_n$ being calculated in accordance with the formula arctan $(2^{-n})$, n = 0, 1, ..., N-1 and each being provided with a mathematical sign $\sigma_n$ which indicates the rotation direction,

**characterized in that**
the predetermined angle z(k) is limited to a range $-\pi/2$ to $+\pi/2$ by means of a quadrant correction as a function of an input signal S, and the mathematical signs $\sigma_0$, $\sigma_1$ for the first and the second rotation angle $\alpha_0$, $\alpha_1$ and the input signal S for the quadrant correction are calculated by a logic circuit (16, 17), and the mathematical signs for the remaining rotation angles are read from a read only memory (15).

2. Method according to Claim 1, **characterized in that** the predetermined angle z(k) is stored modulo-$2\pi$ as a register value w(k) with a bit length $N_w$, with the register value w(k) being calculated in each clock cycle k of the sampling clock by addition of a predetermined value which is associated with the predetermined angle z(k) and of the register value w(k-1) of the preceding clock cycle k-1 of the sampling clock, and any overflow of the register value w(k) is ignored.

3. Method according to Claim 2, **characterized in that** the predetermined angle z(k) is limited to the range from $-\pi/2$ to $+\pi/2$ by means of the quadrant correction by multiplying the first in-phase component $i_o$ and the first quadrant component $q_o$ by $(-1)^s$, s = 0, 1, in each case.

4. Method according to one of Claims 2 or 3, **characterized in that** the bit length $N_w$ of the register value w(k) satisfies the following condition:

$$N_w \geq log2(m) - log2 (\Delta f \cdot T) ,$$

where m is the oversampling factor of the signal x(k), $\Delta f$ is the frequency which can be predetermined, and T is the symbol duration of a digital value of the signal x(k).

5. Method according to one of Claims 2-4, **characterized in that** the number N of stages of the CORDIC algorithm for a predetermined signal/phase noise ratio SNR and a bit length $N_w$ of the register value w(k) satisfies the following condition:

$$(SNR + 3)/6 \leq N \leq N_w - 2.$$

6. Method according to one of the preceding claims, **characterized in that** two guard bits are provided in each stage of the CORDIC algorithm, so that the input and output bit length of the CORDIC algorithm is greater than N + 2.

7. Apparatus for digital frequency correction of a signal, which is sampled using a sampling clock k and is digitized x(k),

- with a series circuit of $N \geq 3$ microrotation blocks (11-13) being provided, to which an in-phase component $i_o$ and a quadrature component $q_o$ of the signal are supplied,
- each microrotation block (11-13) is in each case supplied with a mathematical sign $\sigma_n$ from a mathematical sign table (14), which is included in the apparatus, in order to produce the mathematical signs $\sigma_0$, $\sigma_1$, ... $\sigma_{N-1}$, with guard bits being provided in each microrotation block (11-13),
- a register (31) is provided, in which a modulo-$2\pi$ value of a predetermined angle z(k) is stored, and whose register value w(k) is supplied as an address to the mathematical sign table (14),
- an adder (18) and a delay element (19) are provided, with the adder (18) adding a predetermined digital frequency value to the output value from the delay element (19), and the result being stored in the register (31), and the register value w(k-1) for the previous clock cycle k-1 being supplied to the delay element (19),

**characterized**

- **in that** the series circuit formed by the microrotation blocks (11-13) is preceded by a quadrant correction block (10) to which an input signal s is supplied, and is designed such that the vector $i_0$, $q_0$ which represents the

signal is rotated into the first or fourth quadrant of the complex I/Q plane by means of the quadrant correction block (10), and

- **in that** the mathematical sign table (14) comprises a logic circuit (16, 17) for calculation of the first two mathematical signs $\sigma_0$, $\sigma_1$ and of the input signal s for the quadrant correction block (10), as well as a read only memory (15) which stores the remaining mathematical signs $\sigma_2$, $\sigma_3$, ...., $\sigma_{N-1}$.

8. Apparatus according to Claim 7, **characterized in that** each microrotation block (11-13) has two shift registers (20, 21) for shifting the components of an input vector $I_n$, $Q_n$ of the microrotation block (11-13) through n bits, and has two accumulators (22, 23) for adding the components of the input vector $I_n$, $Q_n$ to the output values of the shift registers (20, 21), with the output values from the shift registers (20, 21) being provided with mathematical signs $\sigma_n$ associated with the respective microrotation block (11-13).

9. Apparatus according to one of Claims 7 or 8, **characterized in that** the read only memory (15) has a capacity of $2^N(N-2)$ bits, and the logic circuit has an XOR gate (16) and an inverter (17) for production of the mathematical signs $\sigma_0$, $\sigma_1$ for the first and second microrotation blocks (11, 12), and for production of the input signal s for the quadrant correction block (10).

10. Apparatus according to Claim 9, **characterized in that** the input signal s for the quadrant correction block (10) is emitted from the XOR gate (16), with the XOR gate (16) having inputs for the two least significant bits $w_0$, $w_1$ of the register value w(k).

11. Apparatus according to one of Claims 9 and 10, **characterized in that** the mathematical sign $\sigma_0$ for the first microrotation block (11) corresponds to the second bit $w_1$ of the register value w(k).

12. Apparatus according to one of Claims 9 to 11, **characterized in that** the mathematical sign $\sigma_1$ for the second microrotation block (12) corresponds to the inverted third bit $w_2$ of the register value w(k).

13. Receiver for a mobile radio, which has a baseband filter with two or more stages (24 - 30) for filtering and processing a received baseband signal x(k), and with the apparatus according to one of Claims 7 to 12 being provided upstream of the last stage (28) of the baseband filter for frequency correction of the baseband signal x(k).

14. Receiver according to Claim 13, **characterized in that** an offset compensation block (26) for removing DC components from the baseband signal x(k) is provided upstream of the apparatus according to one of Claims 7 to 12.

15. Receiver according to one of Claims 13 or 14, **characterized in that** the receiver is a GSM or UMTS mobile radio receiver.

## Revendications

1. Procédé de correction numérique de la fréquence d'un signal x(k), qui est balayé à une cadence k de balayage et qui est numérisé et qui est traité au moyen d'un algorithme CORDIC ayant N stades, de façon à modifier la fréquence du signal x(k) d'une fréquence pouvant être prescrite, dans lequel

- on représente le signal x(k) par un premier vecteur ayant la première composante $i_0$ en phase et la première composante $q_0$ en quadrature dans le plan complexe I/Q,
- on applique le premier vecteur au moyen de l'algorithme CORDIC suivant un angle z(k) prescrit à un deuxième vecteur ayant une deuxième composante $I_N$ en phase et une deuxième composante $Q_N$ en quadrature et le deuxième vecteur représente le signal ayant une fréquence et une phase modifiées,
- l'angle z(k) prescrit se compose d'une pluralité de N 3 angles $\alpha_n$ de rotation différents, chacun des angles $\alpha_n$ de rotation différents étant calculé suivant la formule arc tangente ($2^{-n}$), n = 0, 1, ..., N-1 et étant muni respectivement d'un signe $\sigma_n$ qui indique le sens de rotation,

**caractérisé en ce que**
l'angle z(k) prescrit est limité par une correction de cadran en fonction d'un signal S d'entrée à un domaine $-\pi/2$ à $+\pi/2$ et les signes $\sigma_0$, $\sigma_1$ pour le premier et le deuxième angle $\alpha_0$, $\alpha_1$ de rotation et le signal S d'entrée pour l'erreur de cadran sont calculés par un circuit (16, 17) logique et les signes pour les angles de rotation restants sont lus dans une mémoire (15) morte.

**2.** Procédé suivant la revendication 1, **caractérisé en ce que** l'angle z(k) prescrit est mémorisé modulo $2\pi$ en tant que valeur w(k) de registre ayant une largeur $N_w$ de bit, la valeur w(k) de registre étant calculée dans chaque cadencement k de la cadence d'échantillonnage par addition d'une valeur prescrite associée à l'angle z(k) prescrit et de la valeur w(k-1) de registre du cadencement k-1 précédent de la cadence d'échantillonnage et un dépassement de la valeur w(k) de registre étant négligé.

**3.** Procédé suivant la revendication 2, **caractérisé en ce que** la limitation de l'angle z(k) prescrit à un domaine de $-\pi/2$ à $+\pi/2$ est obtenue par la correction de cadran en multipliant la première composante $i_0$ en phase et la première composante $q_0$ en quadrature, respectivement par $(-1)^s$, s = 0, 1.

**4.** Procédé suivant l'une des revendications 2 ou 3, **caractérisé en ce que** la largeur $N_w$ de bit de la valeur w(k) de registre satisfait à la condition suivante :

$$N_w \geq \log2\,(m) - \log2\,(\Delta f \cdot T),$$

dans laquelle m est le facteur de suréchantillonnage du signal x(k), $\Delta f$ est la fréquence qui peut être prescrite et T est la durée de symbole d'une valeur numérique du signal x(k).

**5.** Procédé suivant l'une des revendications 2 à 4, **caractérisé en ce que** le nombre des stades de l'algorithme CORDIC pour un rapport signal-phase-bruit SNR prescrit et une largeur $N_w$ de bit de la valeur w(k) de registre satisfait à la condition suivante :

$$(SNR + 3)\,/6 \leq N \leq N_w - 2.$$

**6.** Procédé suivant l'une des revendications précédentes, **caractérisé en ce que** dans chaque stade de l'algorithme CORDIC sont prévus deux bits de garde, de sorte que la largeur de bit d'entrée et de sortie de l'algorithme CORDIC est plus grande que N + 2.

**7.** Dispositif de correction numérique de la fréquence d'un signal, qui est échantillonné à une cadence k d'échantillonnage et qui est numérisé x(k),

- dans lequel il est prévu un circuit série de N 3 blocs (11 à 13) de microrotation, auquel est envoyée une composante $i_0$ en phase et une composante $q_0$ en quadrature du signal,
- il est envoyé à chaque bloc (11 à 13) de microrotation, respectivement, un signe $\sigma_n$ à partir d'une table (14) de signes donnée par le dispositif pour la production des signes $\sigma_0$, $\sigma_1$, ..., $\sigma_{N-1}$, des bits de garde étant prévus dans chaque bloc (11 à 13) de microrotation,
- il est prévu un registre (31) dans lequel une valeur Modulo-$2\pi$ d'un angle z(k) prescrit est mémorisée et dont la valeur w(k) de registre est envoyée à la table (14) de signes comme adresse,
- il est prévu un additionneur (18) et un élément (19) temporisateur, l'additionneur (18) additionnant une valeur de fréquence numérique prescrite à la valeur de sortie de l'élément (19) temporisateur et le résultat étant mémorisé dans le registre (31) et il est envoyé à l'élément (19) temporisateur la valeur w(k-1) de registre du cadencement k-1 précédent,

    **caractérisé**

- **en ce qu'**il est monté en amont du circuit série des blocs (11 à 13) de microrotation un bloc (10) de correction de cadran, auquel est envoyé un signal S d'entrée et qui est conformé de façon à ce que le vecteur $i_0$, $q_0$ représentant le signal est tourné dans le premier ou le quatrième cadran du plan complexe I/Q par le bloc (10) de correction de cadran, et
- **en ce que** la table (14) de signes comprend un circuit (16, 17) logique de calcul des deux premiers signes $\sigma_0$, $\sigma_1$ et du signal S d'entrée pour le bloc (10) de correction de cadran ainsi qu'une mémoire (15) morte qui mémorise les signes $\sigma_2$, $\sigma_3$, ..., $\sigma_{N-1}$ restants.

**8.** Dispositif suivant la revendication 7, **caractérisé en ce que** chaque bloc (11 à 13) de microrotation a deux registres (20, 21) à décalage pour décalage des composants d'un vecteur $I_n$, $Q_n$ d'entrée du bloc (11 à 13) de microrotation de n bits et deux cumulateurs (22, 23) pour l'addition des composants du vecteur $I_n$, $Q_n$ d'entrée aux valeurs de sortie des registres (20, 21) à décalage, les valeurs de sortie des registres (20, 21) à décalage étant munies du signe $\sigma_n$ associé au bloc (11 à 13) respectif de microrotation.

9. Dispositif suivant l'une des revendications 7 ou 8, **caractérisé en ce que** la mémoire (15) morte a une capacité de $2^N \cdot (N-2)$ bits et le circuit logique comprend une porte OU exclusif (16) et un inverseur (17) de production de signes $\sigma_0$, $\sigma_1$ pour le premier et le deuxième bloc (11, 12) de microrotation et du signal S d'entrée pour le bloc (10) de correction de cadran.

10. Dispositif suivant la revendication 9, **caractérisé en ce que** le signal S d'entrée pour le bloc (10) de correction de cadran est émis par la porte (16) OU exclusif, la porte (16) OU exclusif ayant des entrées pour les deux bits $w_0$, $w_1$ les moins significatifs de la valeur w(k) du registre.

11. Dispositif suivant l'une des revendications 9 et 10, **caractérisé en ce que** le signe $\sigma_0$ pour le premier bloc (11) de microrotation correspond au deuxième bit $w_1$ de la valeur w(k) du registre.

12. Dispositif suivant l'une des revendications 9 à 11, **caractérisé en ce que** le signe $\sigma_1$ pour le deuxième bloc (12) de microrotation correspond au troisième bit $w_2$ inversé de la valeur w(k) du registre.

13. Récepteur d'un appareil de téléphonie mobile, qui a un filtre de bande de base ayant plusieurs étages (24 à 30) de filtrage et de traitement d'un signal x(k) de bande de base reçu et dans lequel le dispositif suivant l'une des revendications 7 à 12 est prévu avant le dernier étage (28) du filtre de bande de base pour la correction de fréquence du signal x(k) de bande de base.

14. Récepteur suivant la revendication 13, **caractérisé en ce qu'**avant le dispositif suivant l'une des revendications 7 à 12 est prévu un bloc (16) de compensation de décalage pour l'élimination de parties continues du signal x(k) de bande de base.

15. Récepteur suivant l'une des revendications 13 ou 14, **caractérisé en ce que** le récepteur est un récepteur de téléphonie mobile GSM ou UMTS.

FIG 1

FIG 2

FIG 3

FIG 4